# EUROPEAN PATENT SPECIFICATION

(11) **EP 3 225 896 B1**
(45) Date of publication and mention of the grant of the patent: **04.09.2019**
(21) Application number: 17163215.1
(22) Date of filing: 28.03.2017
(51) Int. Cl.: F16L 47/03, F16L 47/28, F16L 55/162, F16L 47/30

(54) **ELECTROWELDABLE SADDLE-TYPE FITTING AND RELATIVE WELDING METHOD**
ELEKTROSCHWEISSBARER SATTELFÖRMIGER ROHRVERBINDER UND ENTSPRECHENDES SCHWEISSVERFAHREN
RACCORD ÉLECTROSOUDABLE EN FORME DE SELLE ET MÉTHODE DE SOUDAGE ASSOCIÉ

(30) Priority: 01.04.2016 IT UA20162246
(43) Date of publication of application: 04.10.2017
(73) Proprietor: NUPI INDUSTRIE ITALIANE S.p.A., 21052 Busto Arsizio (VA) (IT)
(72) Inventor: GENONI, Marco, 20020 Arese (MI) (IT)
(74) Representative: Branca, Emanuela

(56) References cited:
- DE-U1-202005 005 016
- JP-A- 2001 108 180
- JP-A- 2006 077 913

## Description

The present invention relates to an electroweldable saddle-type fitting and to a relative welding method.

It is known to join together components made of heat sealable material, such as for example pipe sections or by-pass pipes made of polyethylene, through suitable electroweldable fittings, so as to provide a mechanically stable and tight constraint. For this purpose, the electroweldable fittings are equipped, close to the walls facing the components made of polyethylene, with one or more electric wire windings, provided at the ends with a pair of electric terminals. By passing electric current between the ends of the electric wire windings they are heated, causing the fusion of a portion of the fitting together with the components made of polyethylene associated with it and a relative mechanically stable and tight constraint.

The welding interventions on polyethylene pipes, according to what is known, have the drawback of requiring direct access to the pipe section on which it is necessary to operate, to position on the outer surface of the pipe the electroweldable fitting and proceed with the relative welding by heat fusion, possibly after having suitably treated the surface of the pipe to prepare it for welding. Therefore, such welding interventions are in general carried out before or during the application of the pipes or making digging interventions to expose the pipe sections on which to intervene.

Such interventions can concern the partial or total replacement of a straight pipe section, the creation or closure of a by-pass pipe with respect to the straight pipe, as well as the closure of a failure in a point of the pipe.

Document JP 2006 077913 A, on the other hand, shows the intervention on a pipe provided with by-pass pipe, which entails positioning a new heat-sealable pipe inside the previous one, then joining a new by-pass pipe to a saddle-type fitting equipped with a cylindrical sleeve made up of two rotatable coaxial portions and bringing such an assembly into the joining position inside the new electroweldable pipe in operation.

The assembly consisting of the saddle-type fitting and the by-pass pipe is inserted inside the new electroweldable pipe and positioned in the by-pass point pulling it through a cable actuated in traction by a winch arranged at the outlet of the by-pass pipe and connected to the free end of the new by-pass pipe, in other words at the opposite end to that connected to the saddle-type fitting.

After the positioning of the assembly in the by-pass point the saddle-type portion is welded inside the new pipe and then the two coaxial portions of the sleeve of the saddle-type fitting are welded together.

Such a solution represents a first response to the requirement to intervene on pipes already laid, but nevertheless requires a fitting made up of many parts and particularly a methodology of insertion that is laborious and in any case subject to restrictions with reference to the maximum possible distance between the outputs of the pipes on which to intervene and the by-pass point.

The aim of the present invention is to provide an electroweldable saddle-type fitting and a relative welding method suitable for intervention on polyethylene pipes already laid even of substantial length.

Another aim of the present invention is to provide an electroweldable saddle-type fitting and a relative welding method that reduce to the minimum the needs to carry out excavations close to the pipes on which to intervene.

Another aim of the present invention is to provide an electroweldable saddle-type fitting and a relative welding method that are particularly simple and functional, with low costs.

These aims according to the present invention are achieved by providing an electroweldable saddle-type fitting and a relative welding method as outlined in the independent claims.

Further characteristics are highlighted in the dependent claims.

The characteristics and the advantages of an electroweldable saddle-type fitting and a relative welding method according to the present invention will become clearer from the following description, given as a non-limiting example, referring to the attached schematic drawings, in which:
figure 1 is an enlarged perspective view of an electroweldable saddle-type fitting according to the invention;
figure 2 is a sectional view of the fitting of figure 1;
figure 3 is a perspective view of a pipe section bearing an opening for the entry of a by-pass pipe;
figure 4 shows an assembly consisting of the fitting of figure 1 applied inside the heat-sealable pipe section of figure 3, in which the fitting is joined to a by-pass pipe;
figure 5 is a section view according to the plane line V-V of the assembly of figure 4.

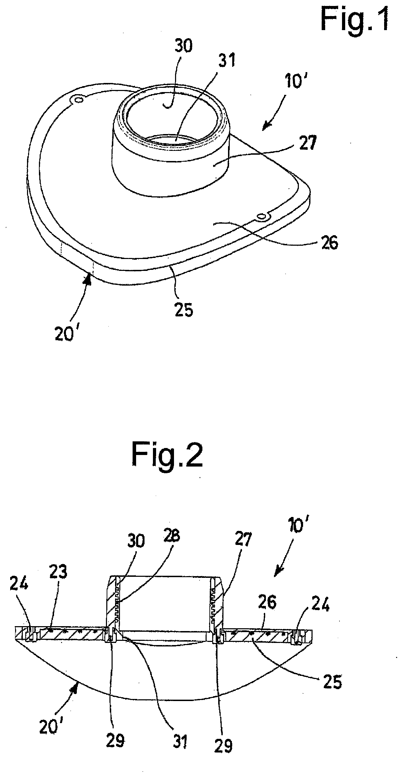

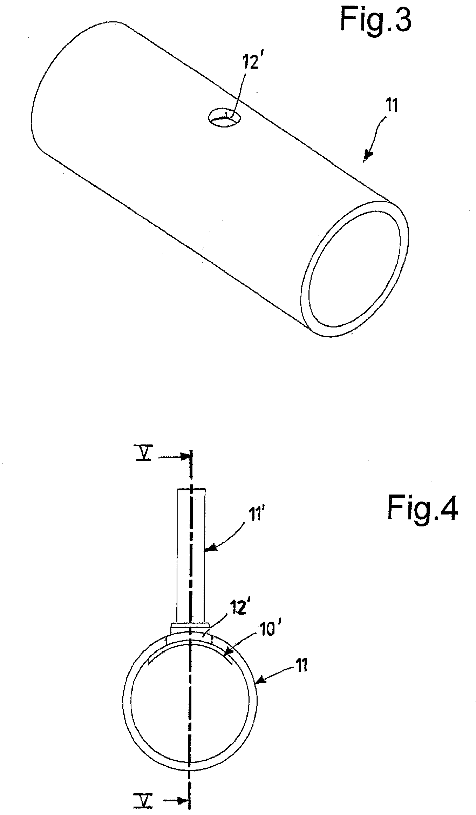

With reference to figures 1 to 5, an electroweldable saddle-type fitting is shown wholly indicated with 10'.

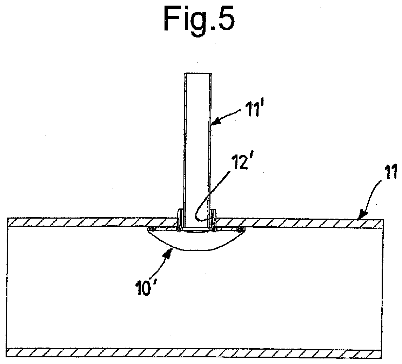

The saddle-type fitting 10' according to the present invention is weldable by means of heat fusion inside a heat-sealable pipe 11, for example made of polyethylene, at an opening 12' on the cylindrical skirt for a by-pass pipe 11', as well as being weldable by fusion also to the same by-pass pipe 11', for example made of polyethylene (figure 5).

The term by-pass pipe 11' is meant to indicate a pipe bifurcated from the straight pipe, of smaller diameter than it, shown in the examples with axis perpendicular with respect to the straight pipe, but that can have any incidence with it.

The saddle-type fitting 10' comprises a saddle-type wall 20' identifying a convex surface and a concave surface on opposite sides.

The saddle-type wall 20' is equipped with a surface having a predetermined curvature radius able to be coupled with the curvature radius of the heat-sealable pipe section 11 to which it must be heat welded at the opening 12' for the by-pass pipe 11'.

The term curvature radius of the saddle-type wall able to be coupled with the curvature radius of the pipe 11 is meant to indicate an equal or not very different curvature radius so as to allow a shape coupling between the saddle-type wall of the fitting and the wall of the pipe section when the fitting is pressed against the wall of the pipe. Indeed, by means of the possible elastic deformation of the saddle-type wall and/or of the wall of the pipe section it is possible to have a shape coupling even in the case of curvature radii that do not coincide.

The saddle-type wall 20' comprises at least one first electric wire winding 23, associated with the convex side and bearing a first pair of electric terminals 24, arranged on the concave side, for the application of an electric current, suitable for causing the heat fusion of the saddle-type wall 20' and its tight constraint on the inner wall of the heat-sealable pipe 11.

According to a preferred embodiment of the invention, the saddle-type wall 20' is made in two parts, a lower structural portion 25, bearing the concave surface, and an upper heat-fusible portion 26, bearing the convex surface. The first electric wire winding 23 is helically wound in the plane of the saddle-type wall 20. For example, it is placed embedded between the two portions 25 and 26 of the saddle-type wall 20'. In an equivalent manner, there could also be many electric wire windings provided with relative electric terminals.

According to alternative embodiments, the two portions 25 and 26 of the saddle-type wall 20' can be provided through a single molding operation, or they can be two separate parts, able to be assembled and joined together in a permanent manner by the same heat welding operation with which the saddle-type fitting 10' is joined to the pipe 11.

According to an embodiment of the saddle-type fitting 10' shown in the figures, the upper heat-fusible portion 26 is annular in shape and is housed in a matching seat of the lower structural portion 25, so as to make, jointly with it, the convex surface adapted for coupling with the inner wall of the heat-sealable pipe 11.

The saddle-type fitting 10' according to the invention, provides for the presence of a saddle-type wall 20' centrally provided with a through hole 31, defining on opposite sides the convex surface and the concave surface.

The saddle-type wall 20' is provided at the central through hole 31 with a cylindrical sleeve 27 made of heat-fusible material, which extends from the convex surface.

The cylindrical sleeve 27 is provided with at least one further electric wire winding 28, bearing a further pair of electric terminals 29 for the application of an electric current. Similarly to the first pair of electric terminals 24, the further pair of electric terminals 29 is also arranged on the concave side.

The further electric wire winding 28 is arranged helically wound associated with the inner surface of the cylindrical sleeve 27 for the application of an electric current, adapted for causing the heat fusion of the cylindrical sleeve 27 on the by-pass pipe 11', also heat weldable.

According to what is shown as an example in the figures the cylindrical sleeve 27 is provided on the inner surface with a heat fusible coating wall 30. The further electric wire winding 28 is preferably embedded between the cylindrical sleeve 27 and the inner coating wall 30.

According to alternative embodiments, the cylindrical sleeve 27 and the inner coating wall 30 can be made through a single molding operation, or they can be two separate parts, able to be assembled and joined together in a permanent manner by the same heat welding operation with which the saddle-type fitting 10' is joined to the by-pass pipe 11'.

According to a simplified embodiment shown in the figures, the saddle-type wall 20' has a constant curvature radius. According to the invention, it could also have a variable curvature radius, but necessarily able to be coupled with the curvature radius of the inner wall of the pipe in the area of application.

According to the invention the saddle-type fitting 10' is welded inside the electroweldable pipe 11 for the joining of a by-pass pipe 11'.

The saddle-type fitting 10' according to the invention, before carrying out the welding on the heat-sealable pipe 11 and also on the by-pass pipe 11', is introduced inside the heat-sealable pipe 11, possibly using mechanical movement means, available on the market.

The saddle-type fitting 10' is thus positioned in a predetermined welding position inside the heat-sealable pipe 11. This is a position at the opening 12' through which the by-pass pipe 11' is connected in a tight manner. The correct positioning of the saddle-type fitting 10' in the predetermined welding position provides for the insertion of the cylindrical sleeve 27 through the opening 12' and thereafter the introduction of the by-pass pipe 11' inside the cylindrical sleeve 27.

In the welding position, the saddle-type fitting 10' is pressed in contact with the inner wall of the heat-sealable pipe section 11, possibly through the suitable mechanical means, and an electric current is applied to the first pair of electric terminals 24 to obtain the heat fusion of the heat fusible portion 26 on the convex surface of the saddle-type wall 20' with the inner surface of the pipe 11, thus providing a mechanically stable and tight constraint between the saddle-type fitting 10' and the pipe 11.

The subsequent application of an electric current to the further pair of electric terminals 29 makes it possible to obtain the heat fusion of the inner surface of the cylindrical sleeve 27 with the heat weldable by-pass pipe 11', thus providing a mechanically stable and tight constraint between the fitting 10' and the by-pass pipe 11'.

The electroweldable saddle-type fitting and the relative welding method object of the present invention have the advantage of allowing the intervention on buried pipes, also already existing, without the need to make excavations at each of the intervention points.

The electroweldable saddle-type fitting and the relative welding method thus conceived can undergo numerous modifications and variants, all covered by the invention as defined in the claims.

In practice, the materials used, as well as the sizes, can be any according to technical requirements.

## Claims

1. Electroweldable saddle-type fitting comprising a saddle-type wall (20') that defines on opposite sides a convex surface and a concave surface, said saddle-type wall (20') being equipped with a predetermined curvature radius that is couplable with the curvature radius of the heat-sealable pipe section, said saddle-type wall (20') being associated with at least one first electric wire winding (23) associated with the convex side and bearing a first pair of electric terminals (24) arranged on the concave side for the application of an electric current adapted to cause the heat fusion of said saddle-type wall (20'), said saddle-type fitting (10') being adapted to be welded inside a heat-sealable pipe by means of heat fusion of said convex side of the saddle-type wall (20') with the inner surface of the heat-sealable pipe, said electroweldable saddle-type fitting further comprising a cylindrical sleeve (27) made of heat-fusible material, provided with at least one further electric wire winding (28) bearing a further pair of electric terminals (29) for the application of an electric current, wherein said further pair of electric terminals (29) is also arranged on the concave side of the saddle-type wall (20') and in that said further electric wire winding (28) is arranged helically wound on the inner surface of said cylindrical sleeve (27) for the application of an electric current adapted to cause the heat fusion of the cylindrical sleeve (27) on a heat-sealable by-pass pipe.

2. Saddle-type fitting according to claim 1, **characterized in that** said saddle-type wall (20') is made in two parts, i.e. it comprises a lower structural portion (25), bearing said concave surface, and an upper heat-fusible portion (26), bearing said convex surface, said at least one first electric wire winding (23) being placed between said two parts (25, 26) of the saddle-type wall (20').

3. Saddle-type fitting according to claim 2, **characterized in that** said at least one first electric wire winding (23) is helically wound in the plane of said saddle-type wall (20').

4. Saddle-type fitting according to any one of the preceding claims, **characterized in that** said saddle-type wall (20') has constant curvature radius.

5. Method for welding a saddle-type fitting according to the preceding claims to a heat-sealable pipe (11), **characterized in that** it comprises the steps of
- introducing said saddle-type fitting (10') inside a heat-sealable pipe;
- positioning said saddle-type fitting (10') in a predetermined welding position inside said heat-sealable pipe at a by-pass opening (12') of said heat-sealable pipe, inserting said cylindrical sleeve (27) inside said by-pass opening (12');
- pressing said saddle-type fitting (10') in contact with an inner wall of said heat-sealable pipe section;
- applying an electric current to said first pair of electric terminals (24) in order to obtain the heat fusion of said upper heat-fusible portion (26) of the convex surface of the saddle-type wall (20') with the inner surface of the pipe section;
- further applying an electric current to said further pair of electric terminals (29) to obtain the heat fusion of the cylindrical sleeve (27) with the heat-sealable by-pass pipe.

## Patentansprüche

1. Elektroschweißbarer sattelförmiger Rohrverbinder, umfassend eine sattelförmige Wand (20'), die auf gegenüberliegenden Seiten eine konvexe Oberfläche und eine konkave Oberfläche definiert, wobei die sattelförmige Wand (20') in einem vorbestimmten Krümmungsradius bereitgestellt ist, der mit dem Krümmungsradius des heißsiegelfähigen Rohrabschnitts koppelbar ist, wobei die sattelförmige Wand (20') mit mindestens einer ersten elektrischen Drahtwicklung (23) assoziiert ist, die mit der konvexen Seite assoziiert ist und ein erstes Paar von elektrischen Anschlüssen (24) trägt, die auf der konkaven Seite zum Beaufschlagen mit einem elektrischen Strom angeordnet sind, der ausgelegt ist, um die Heißfusion der sattelförmigen Wand (20') zu verursachen, wobei der sattelförmige Rohrverbinder (10') ausgelegt ist, über Mittel einer Heißfusion der konvexen Seite der sattelförmigen Wand (20') im Inneren eines heißsiegelfähigen Rohrs mit der inneren Oberfläche des heißsiegelfähigen Rohrs verschweißt zu werden, wobei der elektroschweißbare sattelförmige Rohrverbinder ferner eine zylindrische Muffe (27) umfasst, die aus einem heißsiegelfähigen Material besteht, die mit mindestens einer weiteren elektrischen Drahtwicklung (28) ausgestattet ist, die ein weiteres Paar aus elektrischen Anschlüssen (29) zum Beaufschlagen mit einem elektrischen Strom trägt, wobei das weitere Paar aus elektrischen Anschlüssen (29) ebenfalls auf der konkaven Seite der sattelförmigen Wand (20') angeordnet ist, und dass die weitere elektrische Drahtwicklung (28) spiralförmig gewunden auf der inneren Oberfläche der zylindrischen Muffe (27) zum Beaufschlagen mit einem elektrischen Strom angeordnet ist, der ausgelegt ist, die Heißfusion der zylindrischen Muffe (27) auf einem heißsiegelfähigen Überbrückungsrohr zu verursachen.

2. Sattelförmiger Rohrverbinder nach Anspruch 1, **dadurch gekennzeichnet, dass** die sattelförmige Wand (20') aus zwei Teilen besteht, d.h., dass sie einen unteren Strukturabschnitt (25), der die konkave Oberfläche trägt, und einen oberen heißfusionierbaren Abschnitt (26) umfasst, der die konvexe Oberfläche trägt, wobei die mindestens eine erste elektrische Drahtwicklung (23) zwischen den zwei Teilen (25, 26) der sattelförmigen Wand (20') platziert ist.

3. Sattelförmiger Rohrverbinder nach Anspruch 2, **dadurch gekennzeichnet, dass** die mindestens eine erste elektrische Drahtwicklung (23) spiralförmig in der Ebene der sattelförmigen Wand (20') gewunden ist.

4. Sattelförmiger Rohrverbinder nach einem der vorstehenden Ansprüche, **dadurch gekennzeichnet, dass** die sattelförmige Wand (20') einen konstanten Krümmungsradius aufweist.

5. Verfahren zum Verschweißen eines sattelförmigen Rohrverbinders nach den vorstehenden Ansprüchen mit einem heißsiegelfähigen Rohr (11), **dadurch gekennzeichnet, dass** es die folgenden Schritte umfasst:
- Einführen des sattelförmigen Rohrverbinders (10') in das Innere eines heißsiegelfähigen Rohrs;
- Positionieren des sattelförmigen Rohrverbinders (10') in einer vorbestimmten Schweißposition im Inneren des heißsiegelfähigen Rohrs an einer Überbrückungsöffnung (12') des heißsiegelfähigen Rohrs, Einführen der zylindrischen Muffe (27) in das Innere der Überbrückungsöffnung (12');
- Pressen des sattelförmigen Rohrverbinders (10') in Kontakt mit einer Innenwand des heißsiegelfähigen Rohrabschnitts;
- Beaufschlagen des ersten Paars aus elektrischen Anschlüssen (24) mit einem elektrischen Strom, um die Heißfusion des oberen heißfusionierbaren Abschnitts (26) der konvexen Oberfläche der sattelförmigen Wand (20') mit der inneren Oberfläche des Rohrabschnitts zu erzielen;
- ferner Beaufschlagen des weiteren Paares aus elektrischen Anschlüssen (29) mit einem elektrischen Strom, um die Heißfusion der zylindrischen Muffe (27) mit dem heißsiegelfähigen Überbrückungsrohr zu erzielen.

## Revendications

1. Raccord électrosoudable en forme de selle comprenant une paroi en forme de selle (20') qui définit sur des côtés opposés une surface convexe et une surface concave, ladite paroi en forme de selle (20') étant équipée d'un rayon de courbure prédéterminé qui est apte à être couplé au rayon de courbure de la section de tuyau thermoscellable, ladite paroi en forme de selle (20') étant associée avec au moins un premier enroulement de fil électrique (23) associé avec le côté convexe et portant une première paire de bornes électriques (24) agencées sur le côté concave pour l'application d'un courant électrique conçu pour provoquer la fusion thermique de ladite paroi en forme de selle (20'), ledit raccord en forme de selle (10') étant conçu pour être soudé à l'intérieur d'un tuyau thermoscellable au moyen d'une fusion thermique dudit côté convexe de la paroi en forme de selle (20') avec la surface interne du tuyau thermoscellable, ledit raccord électrosoudable en forme de selle comprenant en outre un manchon cylindrique (27) constitué de matériau thermofusible, muni d'au moins un enroulement de fil électrique supplémentaire (28) portant une paire supplémentaire de bornes électriques (29) pour l'application d'un courant électrique, dans lequel ladite paire supplémentaire de bornes électriques (29) est également agencée sur le côté concave de la paroi en forme de selle (20') et en ce que ledit enroulement de fil électrique supplémentaire (28) est agencé enroulé de manière hélicoïdale sur la surface interne dudit manchon cylindrique (27) pour l'application d'un courant électrique conçu pour provoquer la fusion thermique du manchon cylindrique (27) sur un tuyau de dérivation thermoscellable.

2. Raccord en forme de selle selon la revendication 1, **caractérisé en ce que** ladite paroi (20') en forme de selle est réalisée en deux parties, c'est-à-dire qu'elle comprend une partie structurelle inférieure (25), portant ladite surface concave, et une partie supérieure thermofusible (26), portant ladite surface convexe, ledit au moins un premier enroulement de fil électrique (23) étant placé entre lesdites deux parties (25, 26) de la paroi en forme de selle (20').

3. Raccord en forme de selle selon la revendication 2, **caractérisé en ce que** ledit au moins un premier enroulement de fil électrique (23) est enroulé de manière hélicoïdale dans le plan de ladite paroi en forme de selle (20').

4. Raccord en forme de selle selon l'une quelconque des revendications précédentes, **caractérisé en ce que** ladite paroi en forme de selle (20') possède un rayon de courbure constant.

5. Méthode de soudage d'un raccord en forme de selle selon les revendications précédentes sur un tuyau thermoscellable (11), **caractérisé en ce qu'**elle comprend les étapes consistant à
- introduire ledit raccord en forme de selle (10') à l'intérieur d'un tuyau thermoscellable ;
- positionner ledit raccord en forme de selle (10') dans une position de soudage prédéterminée à l'intérieur dudit tuyau thermoscellable au niveau d'une ouverture de dérivation (12') dudit tuyau thermoscellable, insérer ledit manchon cylindrique (27) à l'intérieur de ladite ouverture de dérivation (12') ;
- presser ledit raccord en forme de selle (10') en contact avec une paroi interne de ladite section de tuyau thermoscellable ;
- appliquer un courant électrique sur ladite première paire de bornes électriques (24) afin d'obtenir la fusion thermique de ladite partie thermofusible supérieure (26) de la surface convexe de la paroi en forme de selle (20') avec la surface interne de la section de tuyau ;
- appliquer en outre un courant électrique sur ladite paire supplémentaire de bornes électriques (29) pour obtenir la fusion thermique du manchon cylindrique (27) avec le tuyau de dérivation thermoscellable.
